# EUROPEAN PATENT APPLICATION

(11) **EP 4 328 714 A1**
(43) Date of publication of application: **28.02.2024**
(21) Application number: 22191830.3
(22) Date of filing: 24.08.2022
(51) Int. Cl.: G06F 3/01

(54) **TOUCHLESS INTERACTION ENABLEMENT METHOD, APPARATUS AND RETROFITTING ASSEMBLY**

(71) Applicant: AMERIA AG, 69124 Heidelberg (DE)
(72) Inventor: SEILER, Martin, 79238 Ehrenkirchen (DE)
(74) Representative: Best, Bastian

(57) **Abstract**

A computer-implemented touchless interaction enablement method, the method comprising: projecting, using a projection means, a projection scene onto a projection target; capturing, using a calibration depth camera, at least part of the projection scene and generating calibration data, wherein the calibration data at least partially includes content of the captured projection scene; calibrating at least one interaction depth camera based at least in part on the calibration data, thereby enabling the at least one interaction depth camera to detect an input object for recognizing a desired touchless user input made by a user using the input object.

## Description

### TECHNICAL FIELD

The present invention generally relates to touchless user-interaction, and more particularly to a touchless user-interaction enablement method for a user-interface projection. Further, the present invention relates to a touchless user-interaction enabled apparatus. Further, the present invention relates to a retrofitting assembly mountable on a projection means to provide the projection means with touchless user-interaction capabilities. Further, the present invention relates to the use of a depth camera in a touchless user-interaction enablement method, and to a data processing apparatus for carrying out a touchless user-interaction enablement method.

### BACKGROUND

Electronic displays have nowadays become omnipresent in various areas of modern life. Examples include electronic display screens or electronic display projectors in public places which provide useful information to the user, e. g. in shopping malls, trade shows, train stations, airports, and the like, a field which is commonly termed "digital signage". One form of such electronic displays are touchscreens that provide a user-interface including interactive functions to allow users to interact with the information, e. g. by selecting control elements such as buttons, selecting items from a list, controlling a cursor, and the like. Such public touchscreens are nowadays used e. g. in ticketing machines, check-out systems in supermarkets or restaurants, interactive signposts, and the like. Alternatively, projectors providing a projection onto a surface are common. For such projectors, user interaction may also be desired. Existent solutions for providing user-interaction capabilities to user-interface projections are based on a touch surface of a projection target screen.

In particular, not least because of the recent COVID-19 pandemic, users have become hesitant to interact through touch-input in public places because of health concerns. This has created a desire to provide input capabilities, in particular gesture control, without the need of a physical touch. Some commercial products have already addressed this desire, for example:
The touchless air gesture technology of Gestoos (https://gestoos.com/) aims at transforming touchscreens or digital displays into a touch-free experience. The Gestoos technology uses a depth sensor to allow the user to control the mouse cursor of the operating system, mapping the finger coordinates to its screen position, while the fingers stay at a distance from the screen.

GLAMOS (https://www.kickstarter.com/projects/300948436/glamos-bring-your-touchless-screens-to-life), sets out to use lidar technology to turn screens into interactive touch screens.

AIRxTOUCH (https://www.airxtouch.com/) provides an all-in-one touchless interactive kiosk. Depth sensors detect the user's finger before it touches the display and generates click events. The related international patent application WO 2015/139969 provides technological background.

Touchjet (https://www.touchjet.com/wave-lily/) aims at turning flat screen TVs into a tablet for collaboration and interactive presentations using a digital pen.

Ultraleap (https://developer.leapmotion.com/touchfree/) provides leapmotion, which is a small device (infrared camera) with relatively small range for hand tracking and hand gesture recognition. The system uses a single camera, so that the hand recognition precision is limited and decreases the bigger the screen is.

The known technologies provide the control of a touchless user-interface based on detecting an input object, e. g. a hand. However, for projectors, a convenient solution providing input capabilities including a smooth and stable user experience and comprehensible feedback for the user is not available.

It is therefore the technical problem underlying the present invention to provide a user-interaction enablement method suitable for projectors, thereby at least partly increasing the usability compared to other solutions of the prior art.

### SUMMARY

The problem is solved by the subject-matter defined in the independent claims. Advantageous modifications of embodiments of the invention are defined in the dependent claims as well as in the description and the figures.

According to a first aspect of the present invention, a computer-implemented touchless interaction enablement method is provided. The method may comprise projecting, using a projection means, a projection scene onto a projection target. The method may comprise capturing, using a calibration depth camera, at least part of the projection scene and generating calibration data. The calibration data may at least partially include content of the captured projection scene. The method may comprise calibrating at least one interaction depth camera based at least in part on the calibration data, thereby enabling the at least one interaction depth camera to detect an input object for recognizing a desired touchless user input made by a user using the input object.

Touchless interaction may include any type of interaction of a user with a user-interface without the user being required to make physical contact. In particular, touchless user input to a projection scene is included. Examples for touchless user inputs are movements of a cursor which may be displayed to the user as a part of the projection scene or which may be augmented to the projection scene, click operations or gestures.

For touchless user-input, an input object may be used. The term input object includes any kind of suitable input objects such as a hand or a finger of a user, a dedicated input device which may for example be a pen or a spherical device.

In the context of the present invention, the term "enablement" is understood to mean that a function is added and/or expanded and/or optimized. In particular, with reference to the projection means, it is understood to mean that touchless user-interaction capabilities are facilitated or optimized.

The term "projection means" may include any type of means capable of providing a projection scene, including but not limited to projectors or projector arrays. In particular, the projection means may emit light for this purpose.

A "projection scene" in the sense of the present invention is understood as the image which a projection means provides during its operation, in particular on a projection target. The projection scene can, for example, be an image of a scene that is transferred from another device, such as a computer, to the projection means in order to provide it as a projection scene on a projection target. In particular, the projection scene may include a user interface being visually perceptible to the user and preferably providing content for the user. Further, the projection scene may include a machine-readable calibration pattern which will be described in more detail below.

A projection target can in particular be a surface suitable for projections, for example on a wall or on a textile specially designed for this purpose. A projection target can also be an object, for example a cube with blank sides, onto which the projection scene could be projected. The size and shape of the projection targets may vary.

The depth cameras according to the present invention may in particular be infrared stereovision depth cameras. The calibration depth camera may be placed at or near the projection means such that it can observe the projection scene. The interaction depth camera may be placed at or near the projection means such that it can observe an area in which a user may, or is expected to, provide user-input through an input object.

For the purposes of the present invention, the term "calibrating" is understood as a calculation and/or configuration process in which, in particular, the interaction depth camera is enabled to correctly recognize user-input. In simple terms, calibration is performed in such a way that the calibration depth camera generates calibration data with which the interaction depth camera is calibrated. Thus, one can say that one depth camera calibrates another depth camera.

In particular, the calibration data may be used to generate a spatial input area that is observed by the interaction depth camera. In particular, the input area may be mapped to the projection scene such that an input object detected by the interaction depth camera in the input area produces an effect at a correct desired portion of the projection scene. The input area may be a frustum of a cone or a frustum of a pyramid.

Calibration may further include calibration of the projection means. For example, the projection scene can be at least partially adjusted to the input area to increase the precision of user-input detection. This may be necessary in particular if the input area of the interaction depth camera cannot be fully adapted to the projection scene due to conflicting positions of the projection means and the interaction depth camera. By at least partially adjusting the projection scene, the conflict can be effectively resolved.

One aspect of the calibration may include the detection of the edges of the projection scene and the definition of an input area of the interaction depth camera corresponding to the detected edges of the projection scene. By this, user input is detected inside the input area. Outside the input area it may be provided that no user input is detected, although the input device in within a field of view of the interaction depth camera.

Mathematically, each depth camera may be modelled to observe a certain area which may have the form of a frustum of a cone or a frustum of a pyramid. On the other hand, the projection means may be modelled as an inverse depth camera, so to say, providing content instead of observing, though light emitted by the projection means may be modelled as a frustum of a cone or a frustum of a pyramid.

The term "desired" may be understood to indicate that a touchless user input is recognized correctly, i.e. in an intended way. A desired touchless user input may for example be a marking of certain positions on the projection scene, for example, in a similar way as a laser pointer does in PowerPoint presentations or other lectures. For this purpose, for example, a hovering cursor can be displayed overlaying the projection scene. The cursor can have animations that show the recognition of the gesture, depending on the gesture. For example, a click gesture can cause the cursor to change size momentarily, or a circle can be displayed around the cursor.

Further examples for desired touchless user input may be any types of gestures, such as swipe gestures, tap gestures, and other more complex gestures. It may further be provided that a user configures own, i.e. user-defined, gestures and assigns a specific intended user input to these gestures, which is recognized accordingly.

The term "machine-readable calibration pattern" may include all types of suitable patterns that can be used as a calculation basis for a calibration. In particular, a machine-readable calibration pattern can be designed in such a way that it has uniquely distinctive sections that make it possible to derive the respective positions and any distortions of a projection scene. For example, a reference calibration pattern may be stored in a memory against which the captured calibration pattern is compared for calibration purposes, in particular to detect distortions of the projection scene and take them into account for calibration.

The method enables the provision of a very user-friendly and intuitive operation and/or interaction with a user interface. It is particularly advantageous that even a commercially available projector can be equipped to provide touchless user interaction by using depth cameras as proposed in the method of the invention. In addition to the high user-friendliness and the intuitive operation, the hygiene of the user interaction is further increased, since no physical touches are required for a user interaction.

It may be provided that detecting the input object includes determining a pointing direction and/or a position of the input object, using the interaction depth camera. Determining a pointing direction may be performed based on the shape of the input object. For example, if an elongated input object, such as a pen or a finger, is used, the main axis of the elongated input object may be determined as the pointing direction towards the projection scene. Optionally, detecting the input object may comprise determining a set of 3D-points corresponding to the input object, using the interaction depth camera.

The method may comprise recognizing a touchless user input based on a position and/or movement of the input object detected by the interaction depth camera. The method may comprise augmenting, using the at least one projection means, a cursor into the projection scene based on the determined touchless user input, wherein the cursor is visually perceivable by the user. Movement of the input object may include a change of a pointing direction of the input object and/or successive positions of a moving input object.

If a cursor, in particular as a hovering cursor, is provided, other hardware, for example a laser pointer in presentations, can be omitted. A hovering cursor even has better visibility than a laser pointer, as it is visible even in difficult lighting conditions.

Furthermore, by augmenting a hovering cursor, a user can immediately see how the position of his input object, for example his finger, is interpreted by the system. This allows him to interact in a targeted manner and make precise inputs. User-friendliness is thus further enhanced by augmenting a hovering cursor.

The method may provide that the projection scene includes a machine-readable calibration pattern, and wherein calibrating at least one interaction depth camera comprises comparing the captured calibration pattern to a predefined reference calibration pattern. One example of a machine-readable calibration pattern is a chessboard, among others.

The machine-readable calibration pattern can be hidden or placed in the projection scene in such a way that it does not interfere with the user experience. In particular, it can be placed at the edge or in a particularly light color so that it is as unnoticeable as possible.

Alternatively, the machine-readable calibration pattern can be invisible to the human eye, i.e., emitted with a light wavelength range that is outside the visible light spectrum. Of course, the calibration depth camera must be able to see the machine-readable calibration pattern. If the machine-readable calibration pattern is in this case not visually perceivable by a user, it also does not interfere with the user experience.

The method may provide that the calibration data includes a 3D-position information of the projection means relative to the calibration depth camera.

The method may provide that the calibration data includes a 3D-position information of the interaction depth camera relative to the calibration depth camera, preferably wherein calibrating includes calculating a 3D-position information of the interaction depth camera relative to the projection means based on 3D-position information of the interaction depth camera relative to the calibration depth camera and based on 3D-position information of the projection means relative to the calibration depth camera.

Different coordinate transformations and combinations thereof can be performed to get the desired result, which is most preferably the relative position of an input device relative to a projection scene. In other words: During an interaction, the projection means may be controlled depending on a specific user input. For example, if the user uses his finger as an input object and points to a specific position on the projection scene, i.e., on the projection target, the interaction depth camera which detects the finger, will control directly or indirectly the projector to augment a cursor on the respective position in the projection scene. An indirect control is preferred, for example through a computer which is configured to control the projection means and which is configured to receive the position of the finger from the depth camera. In order to project the cursor at the right position, i.e., to emit light in a desired way in order to show the cursor, the position of the finger relative to the projection scene is needed. This position of the finger relative to the projection scene may be obtained by knowing the position of the projection scene relative to the projection means, by knowing the position of the projection means relative to the interaction depth camera. The position of the interaction depth camera relative to the projection means may be calculated through the relative position of the interaction depth camera to the calibration depth camera, and the relative position of the projection means to the calibration depth camera.

The method may provide that calibrating the at least one interaction depth camera comprises defining a spatial input area for recognizing of touchless user input, preferably wherein recognizing of touchless user input is only performed within the spatial input area.

The calibration data may be used to define the spatial input area that is observed by the interaction depth camera. The input area may be mapped to the projection scene such that an input object detected by the interaction depth camera in the input area produces an effect at a correct desired portion of the projection scene. The input area may be a frustum of a cone or a frustum of a pyramid.

The method may provide that after performing capturing the projection scene and generating calibration data, the calibration depth camera is turned in a standby mode or is deactivated. By this feature, energy may be saved.

The method may provide that capturing the projection scene and generating calibration data
- is performed dynamically during an entire duration of a user interaction, thereby creating a real-time calibration stream, and/or
- is performed in predefined time intervals during a user interaction, thereby creating an interval-calibration stream, and/or
- is repeatedly performed upon detecting of one or more calibration-triggering user input(s) and/or a calibration-triggering series of successive user inputs during a user interaction, wherein the respective calibration-triggering user input(s) and/or the calibration-triggering series of successive user inputs is preferably predefined, and/or
- is performed upon detecting one or more re-configuration action(s) of the projection means, in particular a reorientation or change of the position of the projection means, and/or
- is performed upon detecting a change or movement of the projection target.

If capturing the projection scene and generating calibration data is performed dynamically during an entire duration of a user interaction, thereby creating a real-time calibration stream, it is preferred that a hidden or non-visible machine-readable calibration pattern is used, as described above. In this case, calibration can help to achieve an enormously high precision in use. This can be especially desirable when it comes to specific content that is shown in the projection scene. For example, a doctor who uses this method to control a manipulator during an operation and monitors the operation via the projection scene may require a particularly high level of precision.

If capturing the projection scene and generating calibration data is performed in predefined time intervals during a user interaction, thereby creating an interval-calibration stream, still a high precision is provided, wherein the energy consumption is lower. Also in this case, it is preferred that a hidden or non-visible machine-readable calibration pattern is used, as described above.

If capturing the projection scene and generating calibration data is repeatedly performed upon detecting of one or more calibration-triggering user input(s) and/or a calibration-triggering series of successive user inputs during a user interaction, wherein the respective calibration-triggering user input(s) and/or the calibration-triggering series of successive user inputs is preferably predefined, in principle a visually perceivable machine-readable calibration pattern may be used, but also a hidden or non-visible machine-readable calibration pattern may be convenient. This particular implementation is for example convenient for inexperienced users who may try to provide user input which is not recognized correctly. For example, if the user makes the same input several times and then gives a back command again, this may indicate that the user input is not detected in the desired form. If this happens three times in a row, for example, the calibration can be triggered.

If capturing the projection scene and generating calibration data is performed upon detecting one or more re-configuration action(s) of the projection means, in particular a reorientation or change of the position of the projection means, in principle a visually perceivable machine-readable calibration pattern may be used, but also a hidden or non-visible machine-readable calibration pattern may be convenient. A re-configuration action can be, for example, a repositioning of the projection means if the lighting conditions deteriorate due to ambient light and require this. In such cases, a calibration is useful in order not to impair the precision of the operation.

If capturing the projection scene and generating calibration data is performed upon detecting a change or movement of the projection target, in principle a visually perceivable machine-readable calibration pattern may be used, but also a hidden or non-visible machine-readable calibration pattern may be convenient. A change of the projection target can occur if, for example, after the start of a presentation, it is belatedly noticed that a wall was accidentally used as a projection target, although there is a projection target made of textile that can be lowered in front of the wall. A movement of the projection target can occur if, for example, a wind breeze moves the projection target temporarily or permanently. In such cases, a calibration is useful in order not to impair the precision of the operation.

The method may comprise detecting, using the at least one interaction depth camera, the input object and recognizing the touchless user input made by a user using the input object, wherein the input object is at least a part of the user's body.

In particular, the user can use his hand, his finger, for example his index finger, as an input object. Alternatively, he can also use a pen or similar, as described above.

The method may further provide that performing detecting the input object includes the detection of at least a part of the skeleton of the user's body using a skeleton detection algorithm capable of detecting the skeleton of a user by processing image data of the user captured by the interaction depth camera, preferably wherein recognizing a touchless user input includes the direction in which the input object points, the direction being determined at least based on the detected skeleton.

For skeleton detection, common and available skeleton detection algorithms can be used. The skeleton detection can help to detect more precisely the direction in which an input object is pointed. The error rate is thus reduced.

According to a second aspect of the present invention, a touchless interaction enabled apparatus, preferably configured to perform a method according to the first aspect of the present invention, is provided. The apparatus may comprise at least one projection means configured to provide a projection scene onto a projection target which is visually perceivable by a user. The apparatus may comprise at least one calibration depth camera configured to capture the projection scene and to generate calibration data, wherein the calibration data at least partially includes content of the captured projection scene. The apparatus may comprise at least one interaction depth camera being calibrated based on the calibration data and thereby being configured to detect an input object for recognizing a desired touchless user input made by a user using the input object.

The projection means, the calibration depth camera and the interaction depth camera may be aligned in different ways, depending on the use of the apparatus. For example, when the apparatus is used as a mobile tabletop device, the interaction depth camera may be oriented upward to capture user input from a standing user. For example, when the apparatus is used as a hanging device from the ceiling, the interaction depth camera may be oriented downwards to detect user input from a user interacting below.

It may further be provided that the position and/or orientation of the interaction depth camera is variable relative to the projection means/or relative to the calibration depth camera. Preferably, at least two different positions and/or orientations of the interaction depth camera between which a user can choose may be available. The user can thus advantageously always point the interaction depth camera towards himself or towards his input object. For the purpose of correct calibration, it may be provided that the user has to enter the position and/or orientation of the interaction depth camera at a computer that processes the calibration.

The different positions and/or orientations of the interaction depth camera may be predetermined by a mounting means. Such mounting means is described below as a part of the third aspect of the present invention.

All technical implementation details and advantages described with respect to the first aspect of the present invention are self-evidently mutatis mutandis applicable for the second aspect of the present invention and vice versa.

According to a third aspect of the present invention, a retrofitting assembly is provided which is mountable to a projection means to provide the projection means with touchless interaction capabilities, and which preferably facilitates performing a method according to the first aspect of the present invention. The retrofitting assembly may comprise at least one mounting means being mountable to a projection means, wherein optionally the mounting means includes at least one size adjustment mechanism to allow the mounting means to be adapted to the shape and/or size of the projection means. The retrofitting assembly may comprise at least one calibration depth camera attached to the mounting means, wherein the at least one calibration depth camera is configured to capture a projection scene projected by the projection means onto a projection target, and is configured to generate calibration data, wherein the calibration data at least partially includes the captured projection scene. The retrofitting assembly may comprise at least one interaction depth camera attached to the mounting means and being calibratable based on the calibration data and thereby being configurable to detect an input object for recognizing a desired touchless user input made by a user using the input object.

Standard projection means do not have touchless interaction capabilities. By using a retrofitting assembly according to the third aspect of the present invention, such standard projection means may be equipped and enabled to provide touchless interaction capabilities. This enhances the user experience and the usability. Further, this makes a standard projection means versatile in use.

The mounting means may comprise an attachment means for fastening to a projector. This can be, for example, a bracket or a rubber band or a buckle. A hook and loop fastener or similar fastening means are also conceivable. Further, optionally, a size adjustment mechanism may be provided to allow the mounting means to be adapted to the shape and/or size of the projection means. For example, a rubber band with multiple eyelets that allow different diameters of attachment may be such size adjustment mechanism. Furthermore, a hook and loop fastener with a stepless adjustment possibility of the fastening diameter may be such size adjustment mechanism.

The mounting means may comprise a holding structure as a mount for the calibration depth camera and for the interaction depth camera. The holding structure may provide a plurality of possible mounting positions and/or orientations for the calibration depth camera and/or for the interaction depth camera. Different alignments of the calibration depth camera and the interaction depth camera are possible, depending on the use of the apparatus, as described above. The holding structure may provide predetermined positions for the calibration depth camera and/or for the interaction depth camera such that retrofitting is made possible for different projection means.

All technical implementation details and advantages described with respect to the first and/or second aspect of the present invention are self-evidently mutatis mutandis applicable for the third aspect of the present invention and vice versa.

According to a fourth aspect of the present invention, the use of at least one depth camera is provided in a method according to the first aspect of the present invention.

All technical implementation details and advantages described with respect to the first and/or second and/or third aspect of the present invention are self-evidently mutatis mutandis applicable for the fourth aspect of the present invention and vice versa.

According to a fifth aspect of the present invention a data processing apparatus is provided comprising means for carrying out a method according to the first aspect of the present invention. Such data processing apparatus may be a computer configured to perform such method, in particular by having installed a dedicated application on it. The data processing apparatus may comprise various input and output interfaces in order to receive and transmit signals from and to a projection means and/or a calibration depth camera and/or a interaction depth camera.

All technical implementation details and advantages described with respect to the first and/or second and/or third and/or fourth aspect of the present invention are self-evidently mutatis mutandis applicable for the fifth aspect of the present invention and vice versa.

According to a sixth aspect of the present invention a computer program is provided comprising instructions which, when the program is executed by a computer, cause the computer to carry out a method according to the first aspect of the present invention.

All technical implementation details and advantages described with respect to the first and/or second and/or third and/or fourth and/or fifth aspect of the present invention are self-evidently mutatis mutandis applicable for the sixth aspect of the present invention and vice versa.

### BRIEF DESCRIPTION OF THE DRAWINGS

The disclosure may be better understood by reference to the following drawings:
- Fig. 1:: A schematic depiction illustrating the operation of a method according to embodiments of the present invention.
- Fig. 2:: A schematic depiction illustrating the operation of a method according to embodiments of the present invention, including an illustration of a field of view of a calibration depth camera, a field of view and input area of the interaction depth camera, and an input object.
- Fig. 3:: A schematic depiction illustrating the operation of a method according to embodiments of the present invention, including an illustration of a field of view and input area of the interaction depth camera, and an input object.
- Fig. 4:: A schematic depiction illustrating the operation of a method according to embodiments of the present invention, including an illustration of a field of view of a calibration depth camera, a field of view and input area of the interaction depth camera, and an input object as well as a corresponding pointing direction and cursor.
- Fig. 5:: A schematic depiction illustrating the operation of a method according to embodiments of the present invention, including an illustration of a field of view of a calibration depth camera, a field of view and input area of the interaction depth camera, and an input object performing a first gesture.
- Fig. 6:: A schematic depiction illustrating the operation of a method according to embodiments of the present invention, including an illustration of a field of view of a calibration depth camera, a field of view and input area of the interaction depth camera, and an input object performing a second gesture.
- Fig. 7a:: A schematic perspective view of a first exemplary embodiment of a touchless interaction enabled apparatus, configured to perform a method according to embodiments of the present invention.
- Fig. 7b:: A schematic front view of a first exemplary embodiment of a touchless interaction enabled apparatus, configured to perform a method according to embodiments of the present invention.
- Fig. 7c:: A schematic side view of a first exemplary embodiment of a touchless interaction enabled apparatus, configured to perform a method according to embodiments of the present invention.
- Fig. 8a:: A schematic perspective view of a second exemplary embodiment of a touchless interaction enabled apparatus, configured to perform a method according to embodiments of the present invention.
- Fig. 8b:: A schematic front view of a second exemplary embodiment of a touchless interaction enabled apparatus, configured to perform a method according to embodiments of the present invention.
- Fig. 8c:: A schematic side view of a second exemplary embodiment of a touchless interaction enabled apparatus, configured to perform a method according to embodiments of the present invention.
- Fig. 9a:: A schematic perspective view of a first exemplary embodiment of a retrofitting assembly according to embodiments of the present invention.
- Fig. 9b:: A schematic front view of a first exemplary embodiment of a retrofitting assembly according to embodiments of the present invention.
- Fig. 9c:: A schematic side view of a first exemplary embodiment of a retrofitting assembly according to embodiments of the present invention.
- Fig. 10a:: A schematic perspective view of a second exemplary embodiment of a retrofitting assembly according to embodiments of the present invention.
- Fig. 10b:: A schematic front view of a second exemplary embodiment of a retrofitting assembly according to embodiments of the present invention.
- Fig. 10c:: A schematic side view of a second exemplary embodiment of a retrofitting assembly according to embodiments of the present invention.
- Fig. 11:: A schematic illustration of an exemplary input object according to embodiments of the present invention.
- Fig. 12:: A first photography illustration of a usage situation of a touchless interaction enabled apparatus according to embodiments of the present invention.
- Fig. 13:: A second photography illustration of a usage situation of a touchless interaction enabled apparatus according to embodiments of the present invention.
- Fig. 14:: A third photography illustration of a usage situation of a touchless interaction enabled apparatus according to embodiments of the present invention.
- Fig. 15:: A fourth photography illustration of a usage situation of a touchless interaction enabled apparatus according to embodiments of the present invention.
- Fig. 16:: A fifth photography illustration of a usage situation of a touchless interaction enabled apparatus according to embodiments of the present invention.
- Fig. 17:: A sixth photography illustration of a usage situation of a touchless interaction enabled apparatus according to embodiments of the present invention.
- Fig. 18:: A seventh photography illustration of a usage situation of a touchless interaction enabled apparatus according to embodiments of the present invention.
- Fig. 19:: A eighth photography illustration of a usage situation of a touchless interaction enabled apparatus according to embodiments of the present invention.

### DESCRIPTION OF PREFERRED EMBODIMENTS

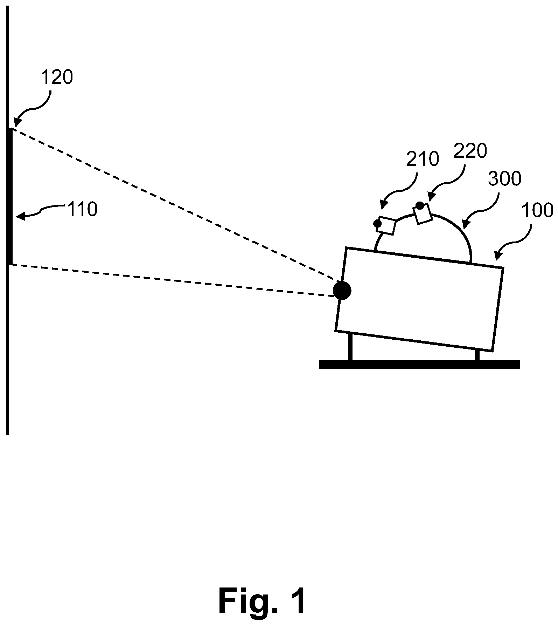

Figure 1 is a schematic illustration of a touchless interaction enabled apparatus, configured to perform a method according to embodiments of the present invention, during operation.

The touchless interaction enabled apparatus includes a projection means 100, which may be a standard projector. Further, the apparatus includes a calibration depth camera 210 and an interaction depth camera 220. The calibration depth camera 210 and the interaction depth camera 220 are fastened to the projection means 100 via a mounting means 300.

The projection means 100 emits light and thus provides a projection scene 110 onto a projection target 120. The projection target may be of any suitable material and shape, such as textile, among others.

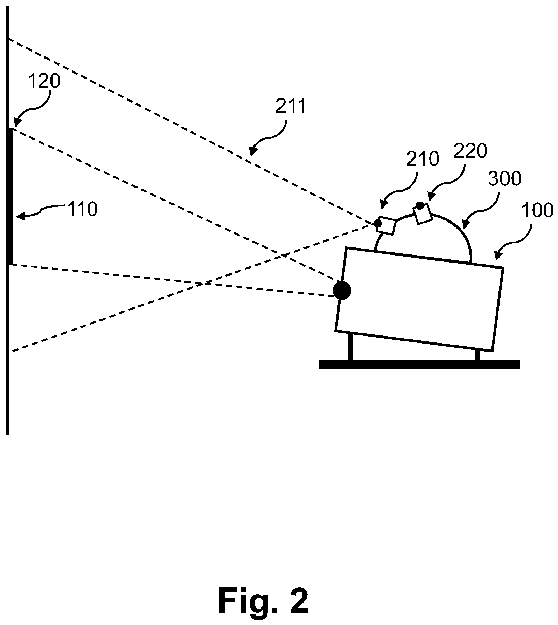

Figure 2 is a further schematic illustration of a touchless interaction enabled apparatus, including a field of view 211 of a calibration depth camera 210, configured to perform a method according to embodiments of the present invention, during operation. The calibration depth camera 210 may capture the projection scene 110 which is within its field of view 211 in order to generate calibration data as described above.

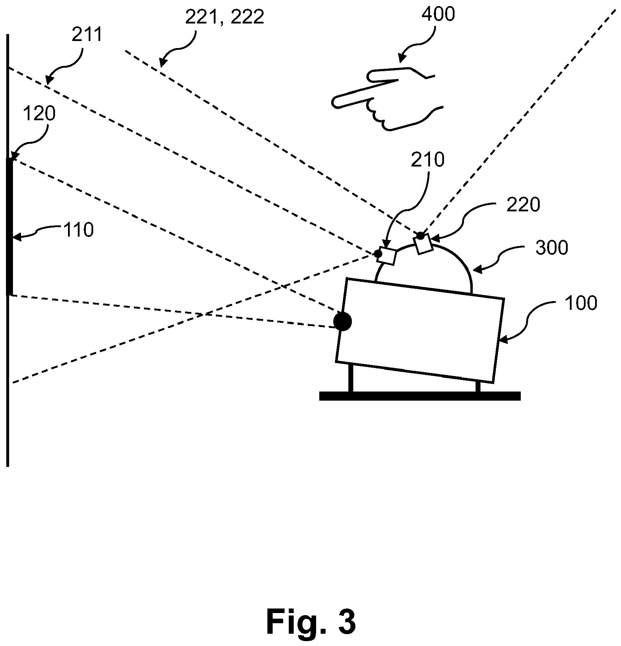

Figure 3 is a further schematic illustration of a touchless interaction enabled apparatus, including a field of view 211 of a calibration depth camera 210, a field of view 221 and an input area 222 of the interaction depth camera 220, and an input object 400, configured to perform a method according to embodiments of the present invention, during operation.

In the illustration of figure 3, the input object 400 is a finger or a hand of a user providing user input in order to perform touchless interaction. The field of view 221 and the input area 222 are, in this illustration, the same. Alternatively, the input area 222 may of course also be a distinct part of the field of view 221 of the interaction depth camera 220. The input object 400 is positioned within the input area 222 and thus can be detected in order to recognize a desired user input.

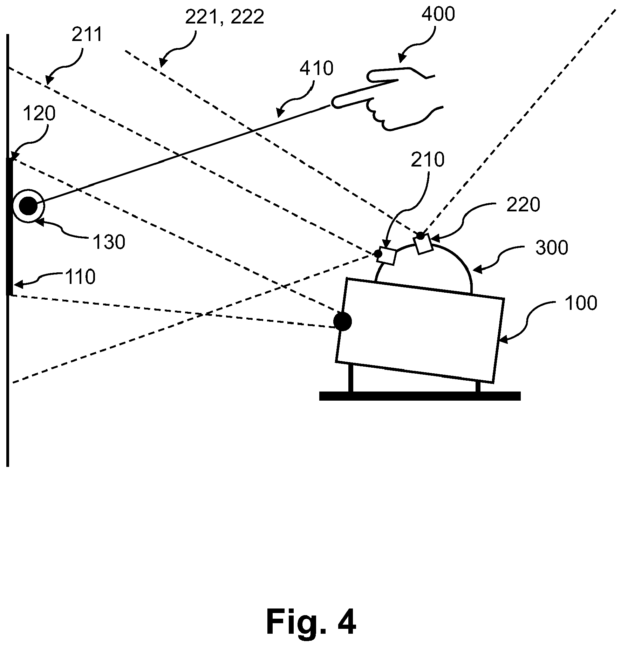

Such desired user input is illustrated exemplarily in figure 4, where a pointing direction 410 is illustrated corresponding to the position and orientation of the input object 400. The projection means 100 augments a cursor 130 into the projection scene 110.

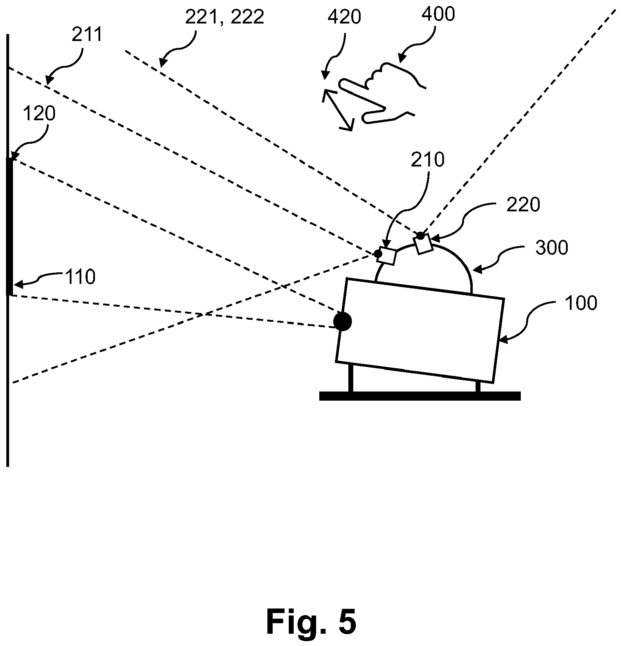

Figure 5 is a further schematic illustration of a touchless interaction enabled apparatus, including a field of view 211 of a calibration depth camera 210, a field of view 221 and input area 222 of the interaction depth camera 220, and an input object 400 performing a first gesture 420, configured to perform a method according to embodiments of the present invention, during operation. The illustrated first gesture 420 may be interpreted as a zoom-in gesture such that the projection means 100 will accordingly increase the zoom level of the projection scene 110.

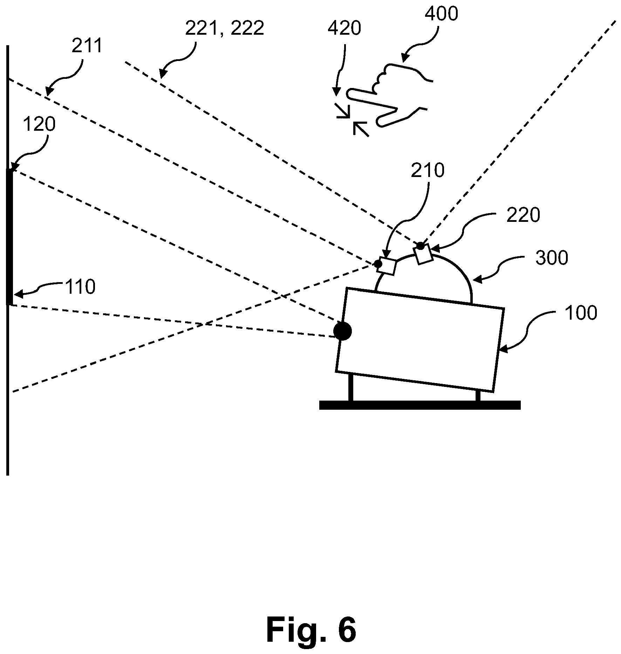

Figure 6 is a further schematic illustration of a touchless interaction enabled apparatus, including a field of view 211 of a calibration depth camera 210, a field of view 221 and input area 222 of the interaction depth camera 220, and an input object 400 performing a second gesture 420, configured to perform a method according to embodiments of the present invention, during operation. The illustrated second gesture 420 may be interpreted as a zoom-out gesture such that the projection means 100 will accordingly decrease the zoom level of the projection scene 110.

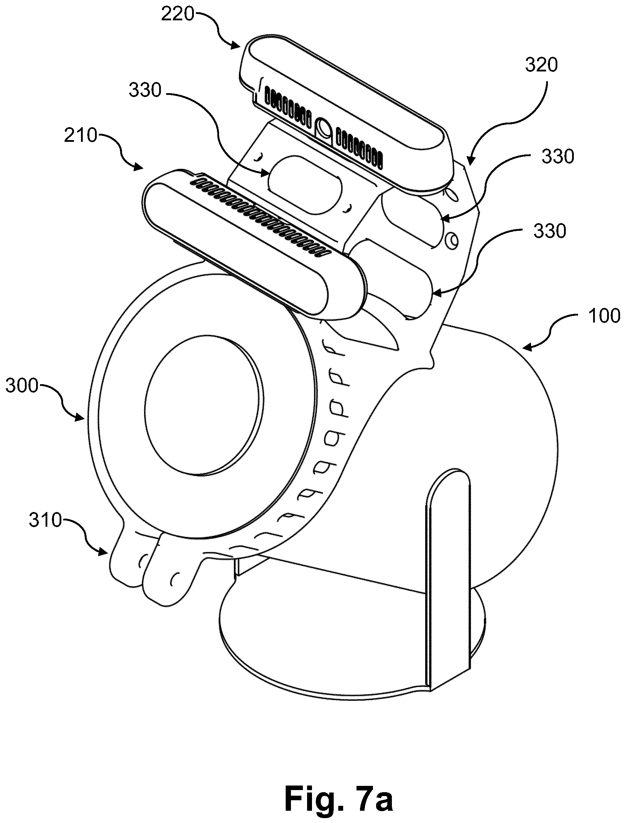

Figure 7a is a schematic perspective view of a first exemplary embodiment of a touchless interaction enabled apparatus, configured to perform a method according to embodiments of the present invention. The touchless interaction enabled apparatus includes a projection means 100, which may be a standard projector. Further, the apparatus includes a calibration depth camera 210 and an interaction depth camera 220. The calibration depth camera 210 and the interaction depth camera 220 are fastened to the projection means 100 via a mounting means 300. The mounting means 300 includes a size adjustment mechanism 310 in order to make it possible to mount it at the projection means 100 and to adapt it to individual shapes, in particular diameters, of projection means 100. The mounting means 300 further includes a holding structure 320 providing a plurality of predetermined attachment positions 330 for attaching the calibration depth camera 210 and the interaction depth camera 220.

In this first exemplary embodiment as shown in figure 7a, the holding structure 320 is configured such that the interaction depth camera 220 can be attached frontwards, upwards and backwards, depending on the attachment position 330 which is chosen. In case of figure 7a, the interaction depth camera 220 is attached upwards. The possibility to attach the interaction depth camera 220 to the holding structure 320 in various attachment positions 330 allows it to be oriented and oriented in various ways. Thus, a user can optimally adjust the orientation of the interaction depth camera 220 and thus the field of view 221 or the input area 222 of the interaction depth camera 220 to his or her needs or to a specific situation of use.

Also, the calibration depth camera 210 may be attached in various attachment positions 330. Depending on the lens of the projection means 100, it may be necessary to adapt the attachment position 330 of the calibration depth camera 210 so that the projection scene 110 is within its field of view 211.

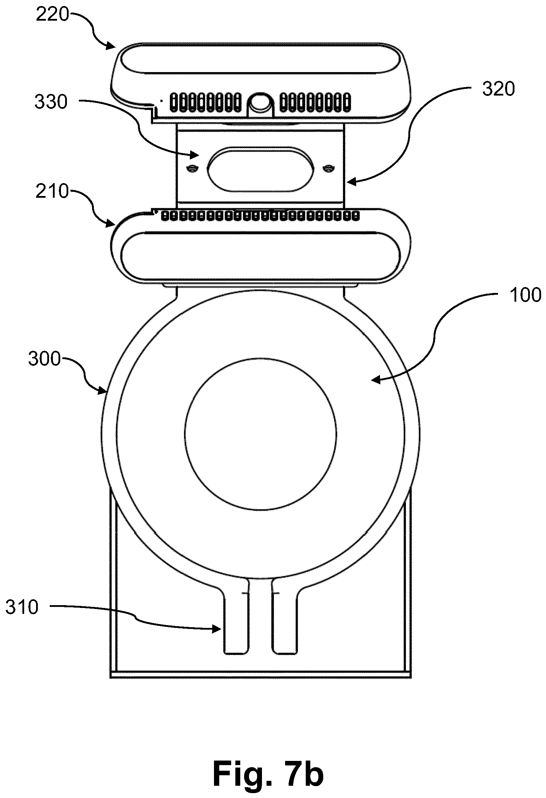

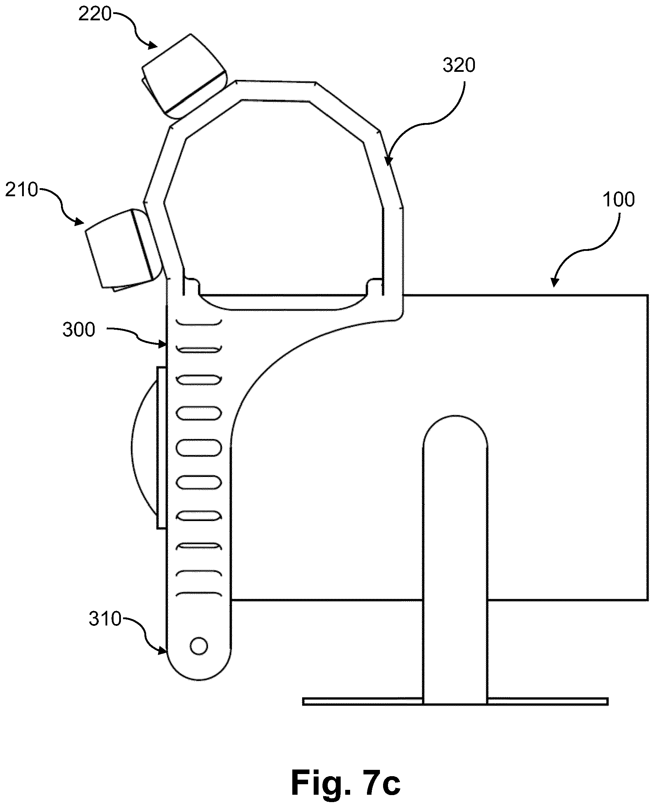

Fig. 7b is a schematic front view of the first exemplary embodiment of figure 7a. Fig. 7c is a schematic side view of the first exemplary embodiment of figure 7a.

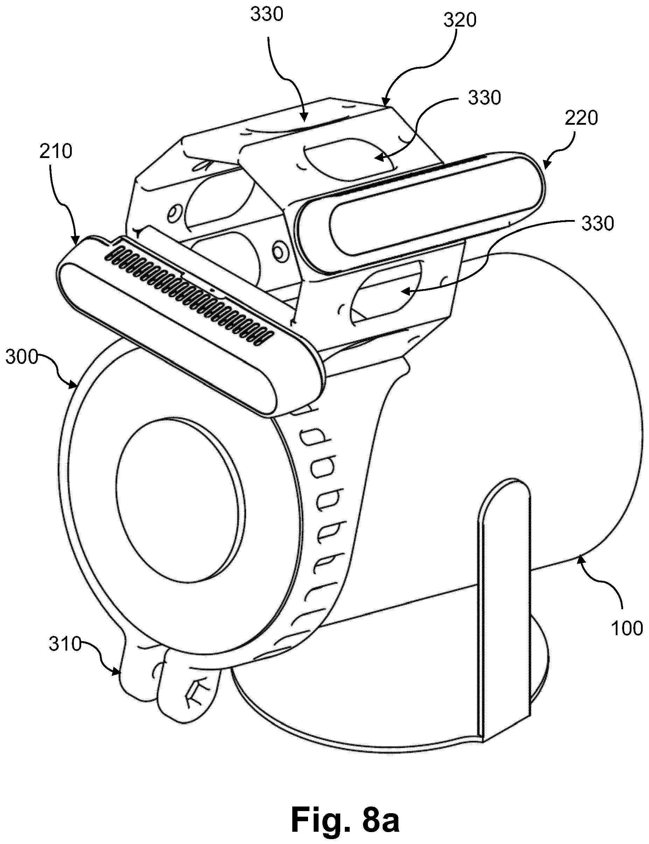

Fig. 8a is a schematic perspective view of a second exemplary embodiment of a touchless interaction enabled apparatus, configured to perform a method according to embodiments of the present invention. The touchless interaction enabled apparatus includes a projection means 100, which may be a standard projector. Further, the apparatus includes a calibration depth camera 210 and an interaction depth camera 220. The calibration depth camera 210 and the interaction depth camera 220 are fastened to the projection means 100 via a mounting means 300. The mounting means 300 includes a size adjustment mechanism 310 in order to make it possible to mount it at the projection means 100 and to adapt it to individual shapes, in particular diameters, of projection means 100. The mounting means 300 further includes a holding structure 320 providing a plurality of predetermined attachment positions 330 for attaching the calibration depth camera 210 and the interaction depth camera 220.

In this second exemplary embodiment as shown in figure 8a, the holding structure 320 is configured such that the interaction depth camera 220 can be attached in different sidewards-positions or upwards, depending on the attachment position 330 which is chosen. In case of figure 8a, the interaction depth camera 220 is attached in a sidewards-position which is on the left side of the projection means 100 with respect to the direction in which the projection means 100 emits light to provide a projection scene 110. The possibility to attach the interaction depth camera 220 to the holding structure 320 in various attachment positions 330 allows it to be oriented and oriented in various ways. Thus, a user can optimally adjust the orientation of the interaction depth camera 220 and thus the field of view 221 or the input area 222 of the interaction depth camera 220 to his or her needs or to a specific situation of use.

Also, the calibration depth camera 210 may be attached in various attachment positions 330. Depending on the lens of the projection means 100, it may be necessary to adapt the attachment position 330 of the calibration depth camera 210 so that the projection scene 110 is within its field of view 211.

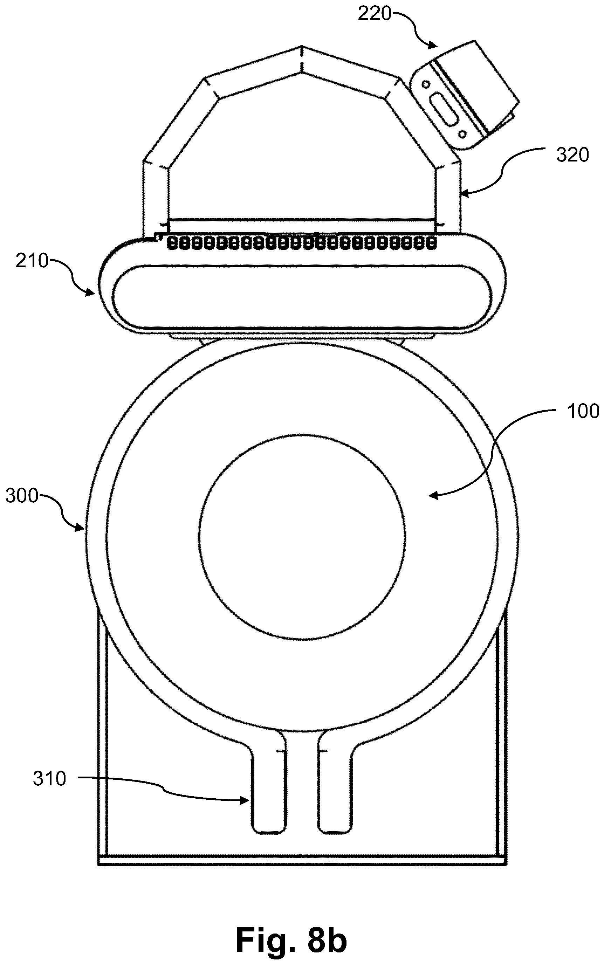

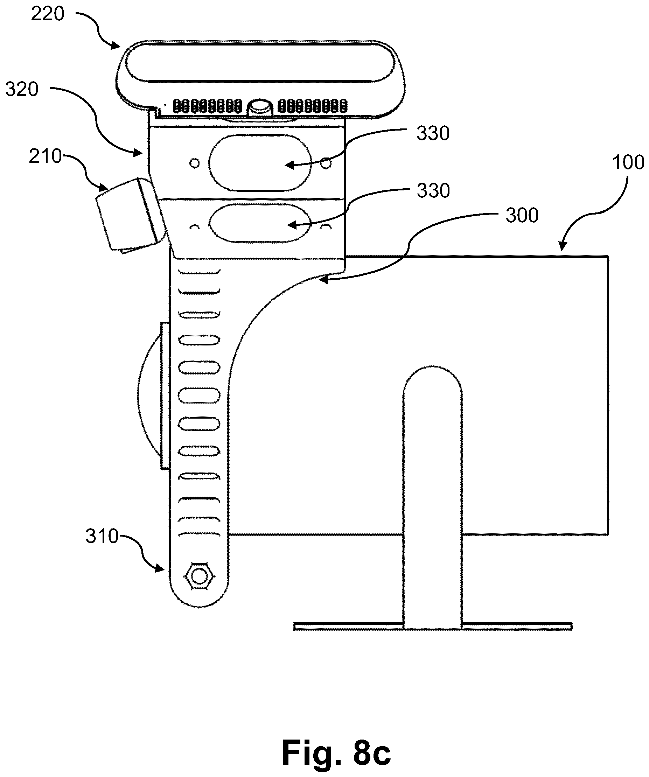

Fig. 8b is a schematic front view of the first exemplary embodiment of figure 8a. Fig. 8c is a schematic side view of the first exemplary embodiment of figure 8a.

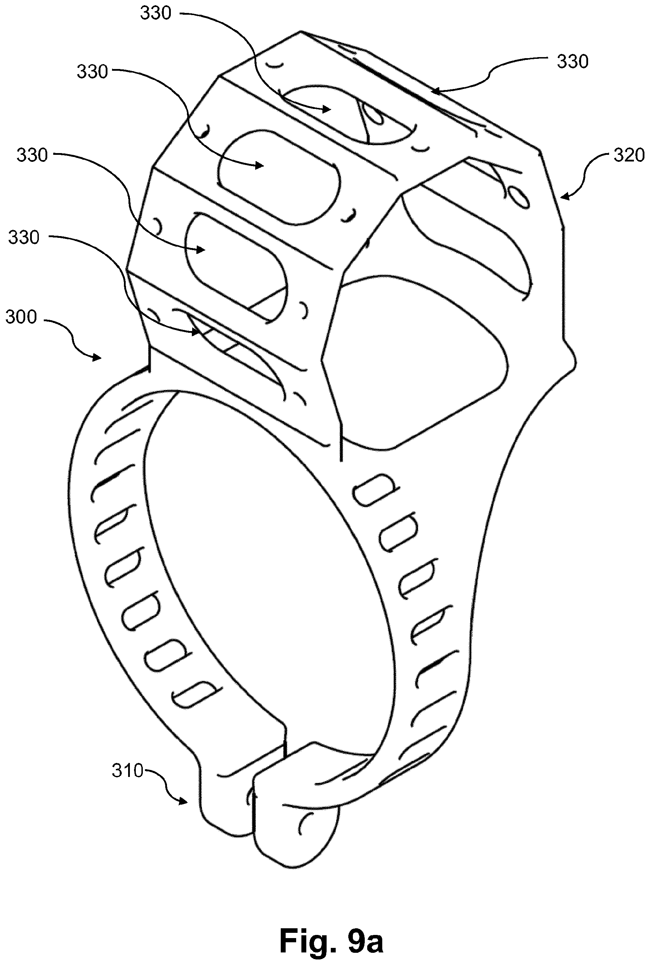

Fig. 9a is a schematic perspective view of a first exemplary embodiment of a retrofitting assembly according to embodiments of the present invention. The retrofitting assembly may be the mounting means 300 described above. In this first exemplary embodiment as shown in figure 9a, the holding structure 320 is configured such that an interaction depth camera 220 can be attached frontwards, upwards and backwards, depending on the attachment position 330 which is chosen, as described above.

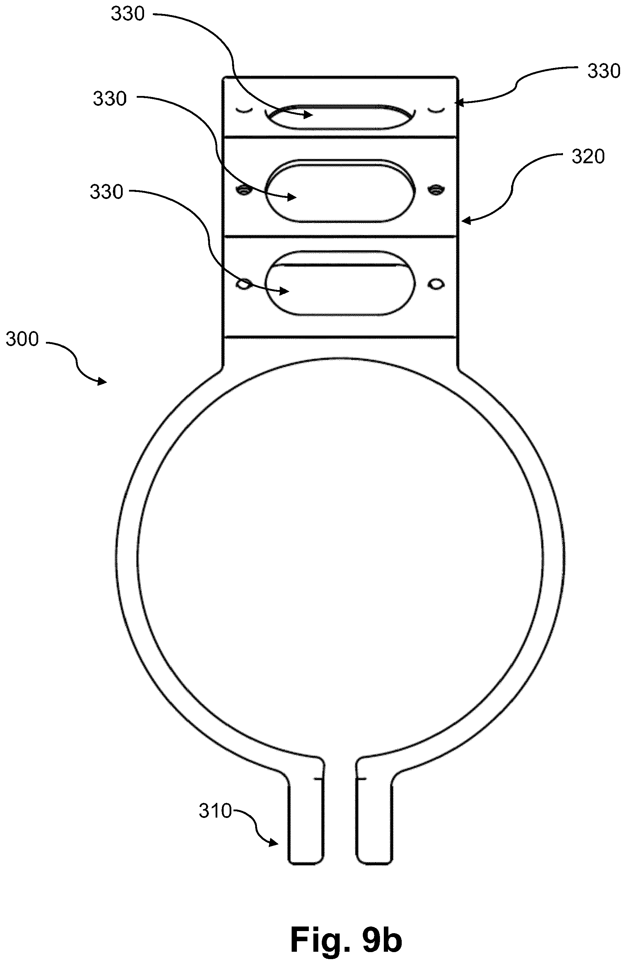

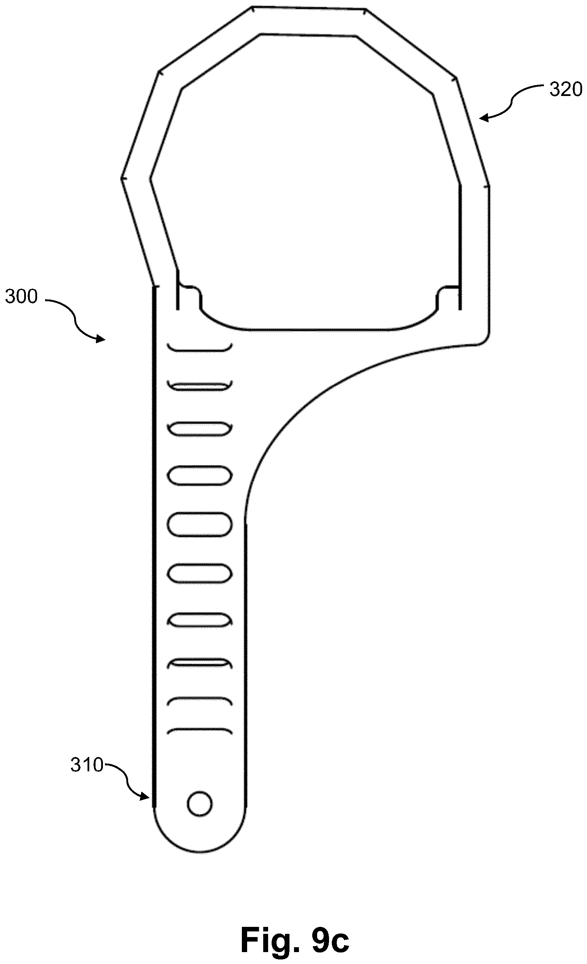

Fig. 9b is a schematic front view of the first exemplary embodiment of a retrofitting assembly as shown in figure 9a. Fig. 9c is a schematic side view of a first exemplary embodiment of a retrofitting assembly as shown in figure 9a.

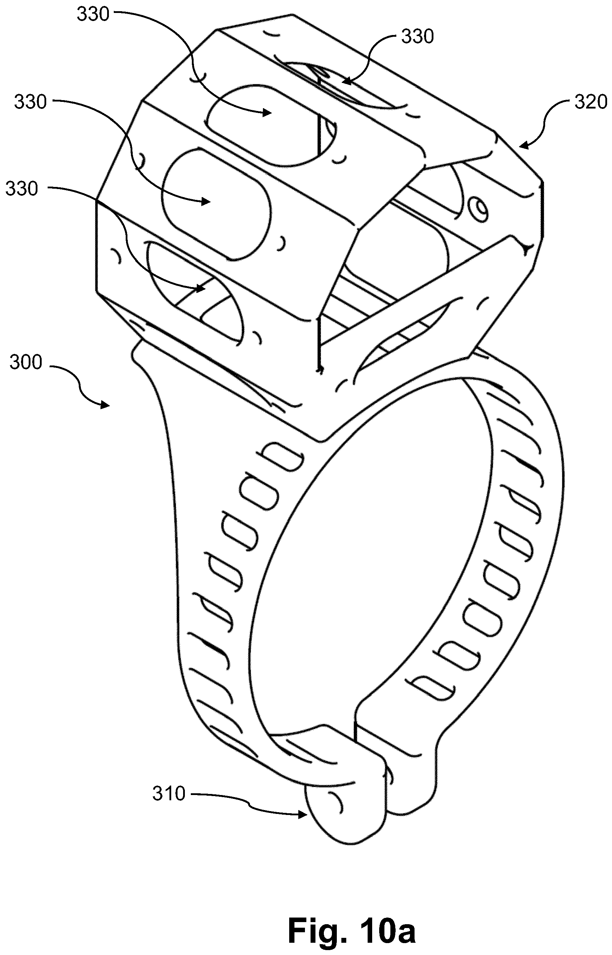

Fig. 10a is a schematic perspective view of a second exemplary embodiment of a retrofitting assembly according to embodiments of the present invention. The retrofitting assembly may be the mounting means 300 described above. In this second exemplary embodiment as shown in figure 10a, the holding structure 320 is configured such that an interaction depth camera 220 can be attached in different sidewards-positions or upwards, depending on the attachment position 330 which is chosen, as described above.

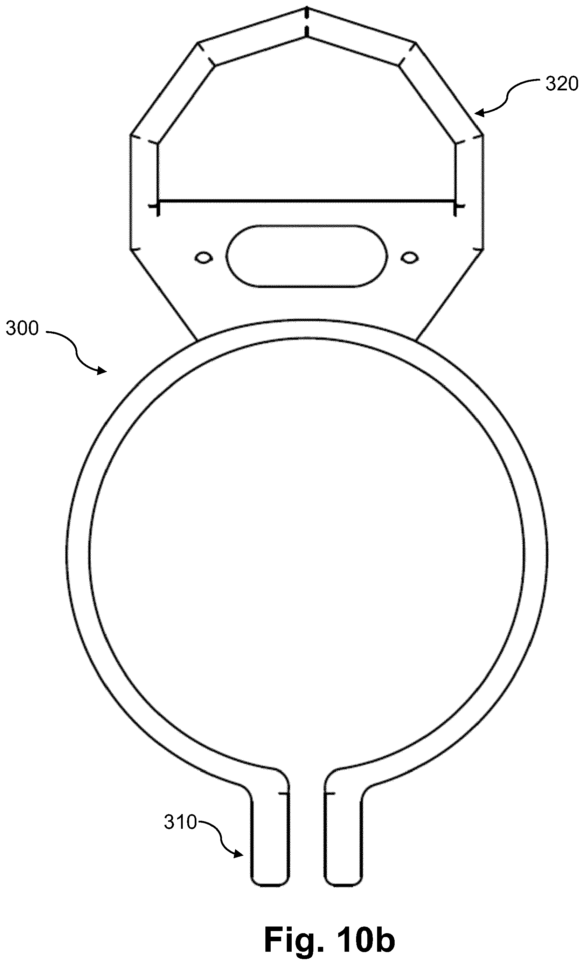

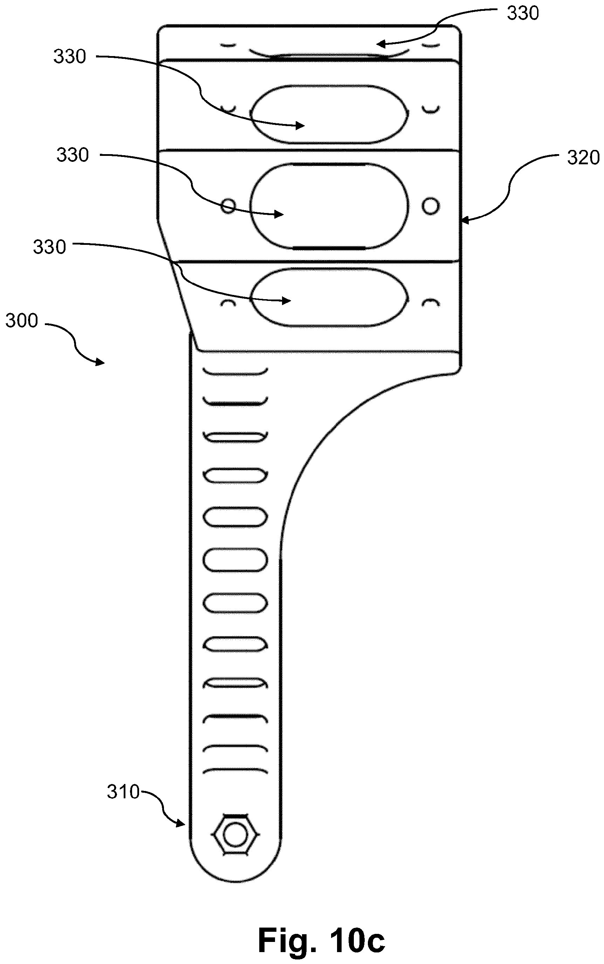

Fig. 10b is a schematic front view of the second exemplary embodiment of a retrofitting assembly shown in figure 10a. Fig. 10c is a schematic side view of the second exemplary embodiment of a retrofitting assembly shown in figure 10a.

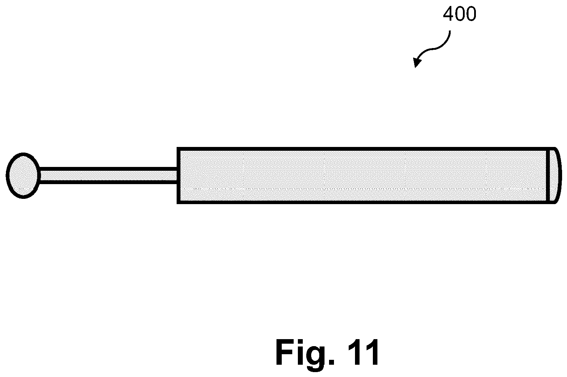

Figure 11 shows an exemplary embodiment of an input object 400. The input object 400 has an elongated shape, similar to a pen.

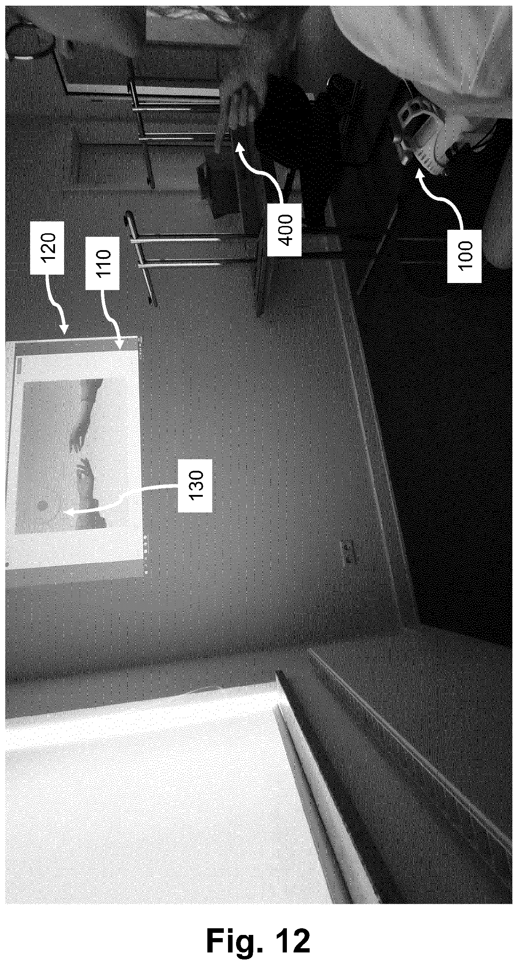

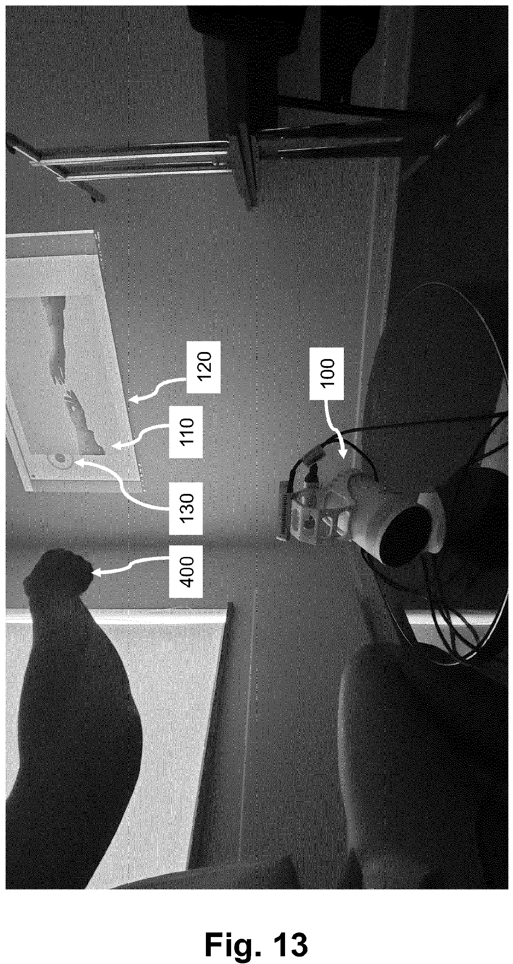

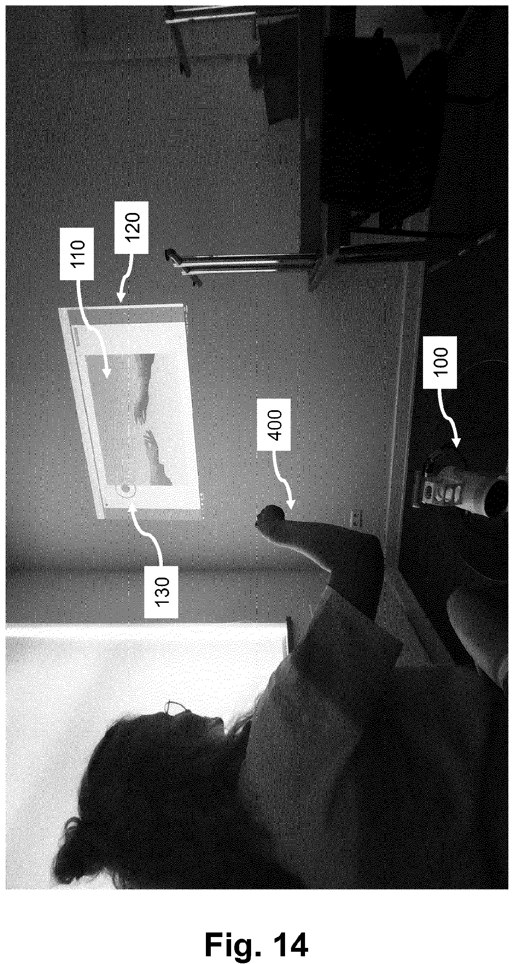

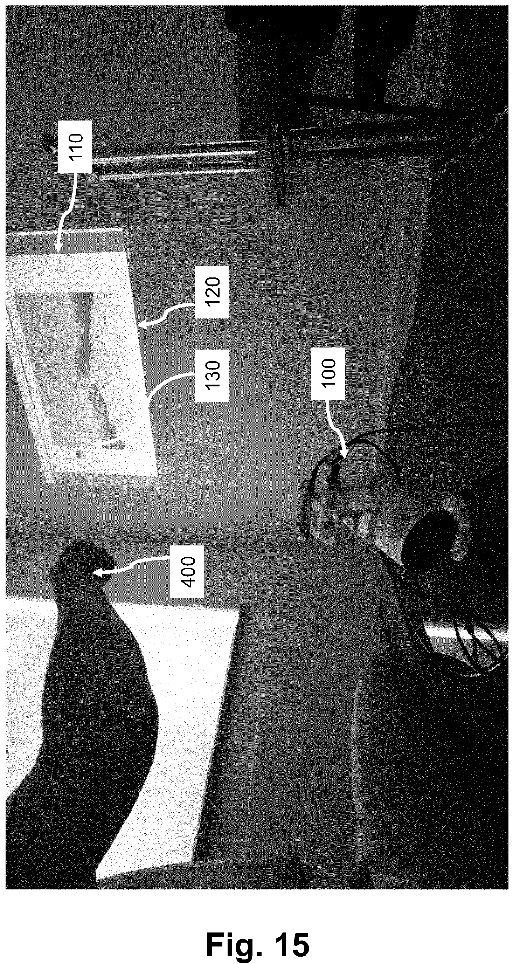

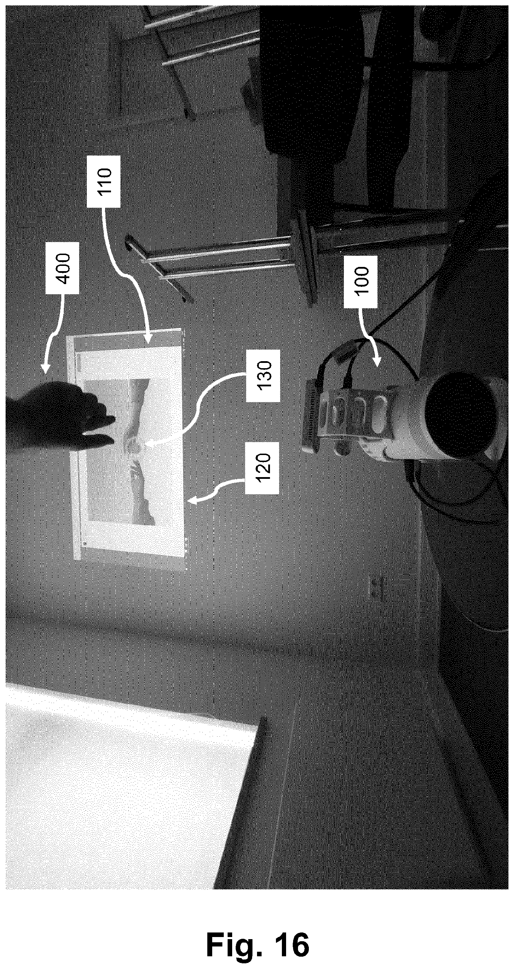

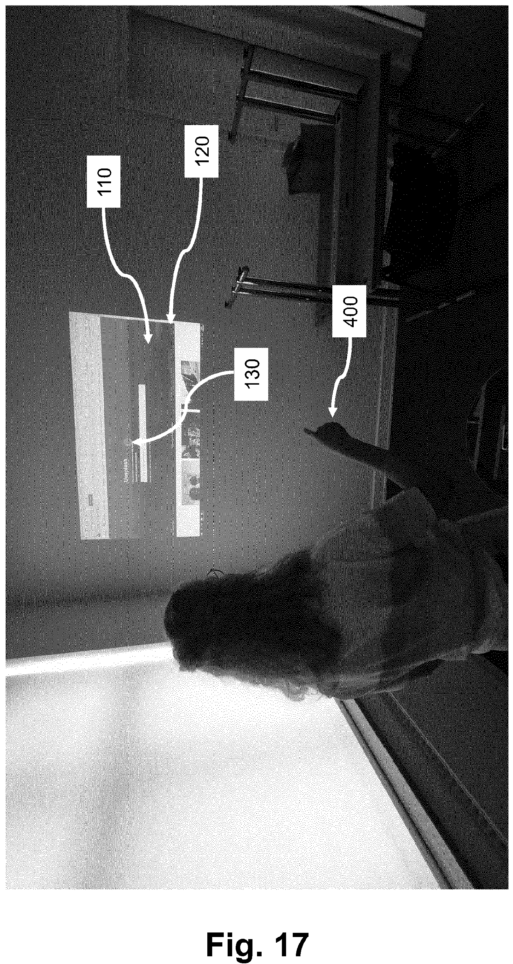

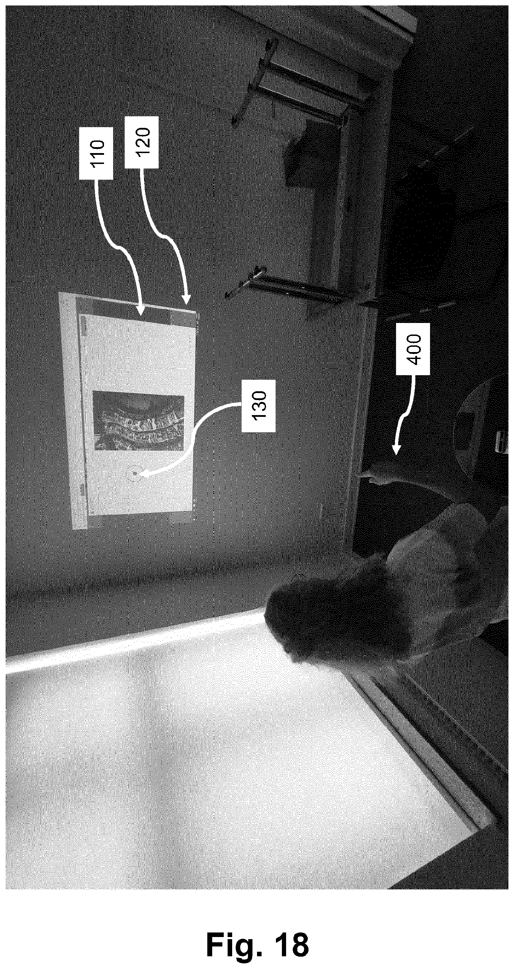

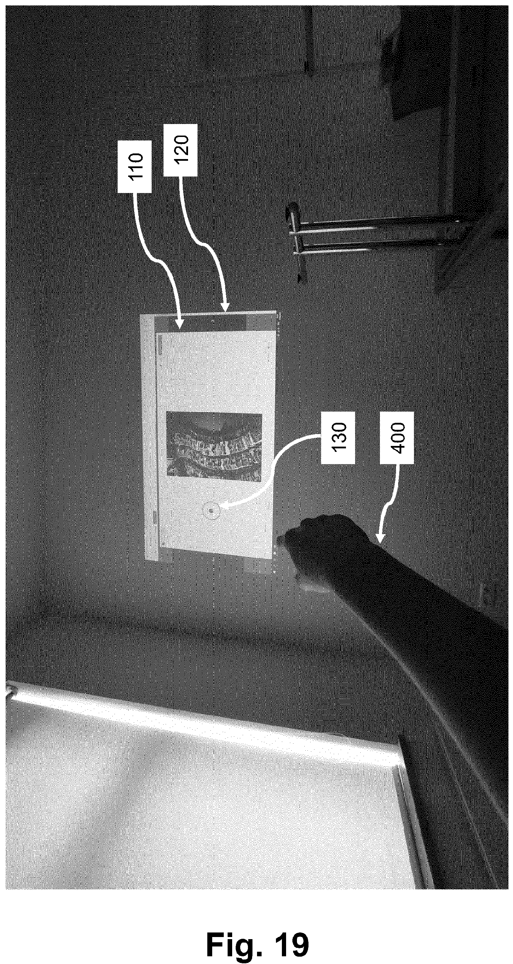

Figures 12, 13, 14, 15, 16, 17, 18 and 19 each show a photographic illustration of a usage situation. It is illustrated a projection means 100, a projection scene 110 on a projection target 120. Further, an input object 400 being the hand and/or finger of a user is shown, wherein a corresponding cursor 130 is projected by the projection means 100 into the projection scene 110.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: projection means
- 110: projection scene
- 120: projection target
- 130: cursor
- 210: calibration depth camera
- 220: interaction depth camera
- 211, 221: field of view
- 222: input area
- 300: mounting means
- 310: size adjustment mechanism
- 320: holding structure
- 330: predetermined attachment position
- 400: input object
- 410: pointing direction
- 420: gesture

## Claims

1. A computer-implemented touchless interaction enablement method, the method comprising:
projecting, using a projection means (100), a projection scene (110) onto a projection target (120);
capturing, using a calibration depth camera (210), at least part of the projection scene (110) and generating calibration data, wherein the calibration data at least partially includes content of the captured projection scene (110); and
calibrating at least one interaction depth camera (220) based at least in part on the calibration data, thereby enabling the at least one interaction depth camera (220) to detect an input object (400) for recognizing a desired touchless user input made by a user using the input object (400).

2. The computer-implemented method of claim 1, further comprising:
recognizing a touchless user input based on a position and/or movement of the input object (400) detected by the interaction depth camera (220);
augmenting, using the at least one projection means (100), a cursor (130) into the projection scene (110) based on the determined touchless user input, wherein the cursor (400) is visually perceivable by the user.

3. The computer-implemented method of any one of the preceding claims, wherein the projection scene (110) includes a machine-readable calibration pattern, and wherein calibrating the at least one interaction depth camera (220) comprises comparing the captured calibration pattern to a predefined reference calibration pattern.

4. The computer-implemented method of any one of the preceding claims, wherein the calibration data includes a 3D-position information of the projection means (100) relative to the calibration depth camera (210).

5. The computer-implemented method of any one of the preceding claims, wherein the calibration data includes a 3D-position information of the interaction depth camera (220) relative to the calibration depth camera (210), preferably wherein calibrating includes calculating a 3D-position information of the interaction depth camera (220) relative to the projection means (100) based on 3D-position information of the interaction depth camera (220) relative to the calibration depth camera (210) and based on 3D-position information of the projection means (100) relative to the calibration depth camera (210).

6. The computer-implemented method of any one of the preceding claims, wherein calibrating the at least one interaction depth camera (220) comprises defining a spatial input area (222) for recognizing of touchless user input, preferably wherein recognizing of touchless user input is only performed within the spatial input area (222).

7. The computer-implemented method of any one of the preceding claims, wherein after performing capturing the projection scene (110) and generating calibration data, the calibration depth camera (210) is turned in a standby mode or is deactivated.

8. The computer-implemented method of any one of the preceding claims, wherein capturing the projection scene (110) and generating calibration data
is performed dynamically during an entire duration of a user interaction, thereby creating a real-time calibration stream, and/or
is performed in predefined time intervals during a user interaction, thereby creating an interval-calibration stream, and/or
is repeatedly performed upon detecting of one or more calibration-triggering user input(s) and/or a calibration-triggering series of successive user inputs during a user interaction, wherein the respective calibration-triggering user input(s) and/or the calibration-triggering series of successive user inputs is preferably predefined, and/or
is performed upon detecting one or more re-configuration action(s) of the projection means (100), in particular a reorientation or change of the position of the projection means (100), and/or
is performed upon detecting a change or movement of the projection target (120).

9. The computer-implemented method of any one of the preceding claims, the method further comprising:
detecting, using the at least one interaction depth camera (220), the input object (400) and recognizing the touchless user input made by a user using the input object (400), wherein the input object (400) is at least a part of the user's body.

10. The computer-implemented method of claim 8, wherein performing detecting the input object (400) includes the detection of at least a part of the skeleton of the user's body using a skeleton detection algorithm capable of detecting the skeleton of a user by processing image data of the user captured by the interaction depth camera (220), preferably wherein recognizing a touchless user input includes the direction in which the input object (400) points, the direction being determined at least based on the detected skeleton.

11. A touchless interaction-enabled apparatus, preferably configured to perform a method according to any one of claims 1 to 10, comprising:
at least one projection means (100) configured to provide a projection scene (110) onto a projection target (120) which is visually perceivable by a user;
at least one calibration depth camera (210) configured to capture the projection scene (110) and to generate calibration data, wherein the calibration data at least partially includes content of the captured projection scene (110); and
at least one interaction depth camera (220) being calibrated based on the calibration data and thereby being configured to detect an input object (400) for recognizing a desired touchless user input made by a user using the input object (400).

12. A retrofitting assembly mountable to a projection means (100) to provide the projection means (100) with touchless interaction capabilities, and preferably to facilitate performing a method according to any one of claims 1 to 10, wherein the retrofitting assembly comprises:
at least one mounting means (300) being mountable to a projection means (100), wherein optionally the mounting means (300) includes at least one size adjustment mechanism (310) to allow the mounting means (300) to be adapted to the shape and/or size of the projection means (100);
at least one calibration depth camera (210) attached to the mounting means (300), wherein the at least one calibration depth camera (220) is configured to capture a projection scene (110) projected by the projection means (100) onto a projection target (120), and is configured to generate calibration data, wherein the calibration data at least partially includes the captured projection scene (110); and
at least one interaction depth camera (220) attached to the mounting means (300) and being calibratable based on the calibration data and thereby being configurable to detect an input object (400) for recognizing a desired touchless user input made by a user using the input object (400).

13. Use of at least one depth camera (210, 220) in a method according to any one of claims 1 to 10.

14. A data processing apparatus comprising means for carrying out the method of any one of claims 1 to 10.

15. A computer program comprising instructions which, when the program is executed by a computer, cause the computer to carry out the method of any one of claims 1 to 10.
